Europäisches Patentamt

European Patent Office

Office européen des brevets

(11) Veröffentlichungsnummer: **0 509 498 A1**

# EUROPÄISCHE PATENTANMELDUNG

(21) Anmeldenummer: **92106569.4**

(22) Anmeldetag: **16.04.92**

(51) Int. Cl.⁵: **A23N 4/06**

(30) Priorität: **17.04.91 DE 4112548**

(43) Veröffentlichungstag der Anmeldung:
**21.10.92 Patentblatt 92/43**

(84) Benannte Vertragsstaaten:
**BE DE DK ES FR GB IT NL PT SE**

(71) Anmelder: **HERBORT MASCHINENBAU GMBH**
**Hamburger Strasse 268**
**W-3300 Braunschweig(DE)**

(72) Erfinder: **Borvitz, Wolfgang**
**Memeler Strasse 25**
**W-3300 Braunschweig(de)**

(74) Vertreter: **Gramm, Werner, Prof. Dipl.-Ing. et al**
**Patentanwälte Gramm + Lins**
**Theodor-Heuss-Strasse 1**
**W-3300 Braunschweig(DE)**

(54) **Maschine zum Entsteinen von Früchten.**

(57) Die Erfindung betrifft eine Maschine zum Entsteinen von Früchten, insbesondere Kirschen, mit einem angetriebenen, horizontal geführten Plattenband (1) dessen in Förderrichtung (2) hintereinander angeordneten Entsteinplatten (3) Vertiefungen (5) zur Aufnahme der Früchte aufweisen und mit oberhalb des Plattenbandes (1) angeordneten Stößeln (12) die zur Durchführung des Entsteinvorganges von einem Hubantrieb (13) lotrecht fluchtend mit den genannten Vertiefungen (5) absenkbar und nach der Entsteinung wieder anhebbar sind. Zur Verbesserung einer derartigen Maschine werden folgende Merkmale vorgeschlagen:

a) Der Antrieb des Plattenbandes (1) ist so ausgelegt, daß er dem Plattenband (1) eine zumindest angenähert kontinuierliche Vorschubgeschwindigkeit verleiht;

b) die Stößel (12) sind mit ihrem Hubantrieb (13) an zumindest einem Entsteinschlitten (7) angeordnet, der parallel zum Plattenband (1) verfahrbar und von einem intermittierend arbeitenden Antrieb (9) entgegen der genannten Förderrichtung (2) um zumindest die in Förderrichtung (2) gemessene Länge (1) einer Entsteinplatte (3) verschiebbar ist;

c) der Entsteinschlitten (7) weist zu seiner zeitweiligen Synchronisation mit dem Plattenband (1) zumindest einen Mitnehmer (14) auf, der von einem Antrieb in den Vorschubweg einer Entsteinplatte (3) einsteuerbar und aus dem Vorschubweg aussteuerbar ist.

EP 0 509 498 A1

Die Erfindung betrifft eine Maschine zum Entsteinen von Früchten, insbesondere Kirschen, mit einem angetriebenen, horizontal geführten Plattenband, dessen in Förderrichtung hintereinander angeordneten Entsteinplatten Vertiefungen zur Aufnahme der Früchte aufweisen, und mit oberhalb des Plattenbandes angeordneten Stößeln, die zur Durchführung des Entsteinvorganges von einem Hubantrieb lotrecht fluchtend mit den genannten Vertiefungen absenkbar und nach der Entsteinung wieder anhebbar sind.

Derartige mit einem Plattenband ausgestattete Maschinen arbeiten intermittierend; das Plattenband wird also während des Entsteinvorganges gestoppt. Nach Abschluß des Entsteinvorganges wird das Plattenband um eine Entsteinplatte weiter bewegt und erneut gestoppt. Die kinematische Verbindung zwischen dem Plattenbandvorschub und der Hubbewegung der Stößel erfolgt über mechanische Elemente, in der Regel über ein "Malteserkreuz".

Nachteilig bei diesem Prinzip ist die intermittierende Arbeitsweise, da durch das ständige abrupte Abbremsen des Plattenbandes die in den Vertiefungen liegenden Früchte aufgrund ihrer Trägheit etwas in Vorschubrichtung des Plattenbandes innerhalb der Vertiefung bzw. aus dieser etwas herausbewegt werden. Bei dem sofort anschließend durchgeführten Entsteinvorgang liegen dann einige Früchte nicht mehr mittig unter den Stößeln, lassen sich also auch nicht mehr mittig entsteinen.

Das ständige Beschleunigen und Verzögern des Plattenbandes erfordert überdies erhebliche Kräfte und führt zu hohen Beanspruchungen und einem entsprechend hohen Verschleiß der das Plattenband antreibenden Kette, die aufgrund der Belastung allmählich gelängt wird. Dies führt zum Versatz zwischen den Stößeln und der jeweiligen Entsteinplatte und damit zu einem außermittigen Entsteinen sowie zu einem zusätzlichen Verschleiß an den Entsteinplatten durch Anlaufen der Stößel.

Die Mechanik mit dem Antrieb über Malteserkreuz erfordert eine exakte Fertigung und Wartung. Dabei liegt die Mechanik unter dem Plattenband und ist dadurch dem vom Plattenband ablaufenden Saft ausgesetzt. Dies führt zu Korrosions- und Schmierungsproblemen.

Der Erfindung liegt die Aufgabe zugrunde, die Eingangs beschriebene Maschine insbesondere hinsichtlich der genannten Mängel zu verbessern.

Diese Aufgabe wird erfindungsgemäß durch folgende Merkmale gelöst:

a) Der Antrieb des Plattenbandes ist so ausgelegt, daß er dem Plattenband eine zumindest angenähert kontinuierliche Vorschubgeschwindigkeit verleiht;

b) die Stößel sind mit ihrem Hubantrieb an zumindest einem Entsteinschlitten angeordnet, der parallel zum Plattenband verfahrbar und von einem intermittierend arbeitenden Antrieb entgegen der genannten Förderrichtung um zumindest die in Förderrichtung gemessene Länge einer Entsteinplatte verschiebbar ist;

c) der Entsteinschlitten weist zu seiner zeitweiligen Synchronisation mit dem Plattenband zumindest einen Mitnehmer auf, der von einem Antrieb in den Vorschubweg einer Entsteinplatte einsteuerbar und aus dem Vorschubweg aussteuerbar ist.

Wenn der Entsteinschlitten nur jede zweite Platte des Plattenbandes entsteint und im Rücklauf jeweils eine Platte überspringt ist es zweckmäßig, wenn zwei in Förderrichtung hintereinander angeordnete, unabhängig voneinander gegenläufig verschiebbare Entsteinschlitten vorgesehen werden. Dadurch ergibt sich auch eine gleichmäßige Belastung der Ketten des Plattenbandes, da ständig ein Schlitten mitgenommen wird, während sich der andere im Rücklauf befindet.

Für eine einfache Konstruktion ist es vorteilhaft, wenn als Mitnehmer zumindest ein lotrecht verschiebbarer Bolzen vorgesehen ist, der in abgesenkter Stellung in den Förderweg eines an jeder Entsteinplatte sitzenden Nocken oder dergleichen ragt.

Für die Steuerung ist es ferner zweckmäßig, wenn die Stößel jedes Entsteinschlittens an einem vom Hubantrieb beaufschlagten Stößelbalken befestigt sind.

Erfindungsgemäß ist es vorteilhaft, wenn der Bewegungsablauf der Maschine als wegabhängige Folgesteuerung ausgeführt wird, die gekennzeichnet ist durch eine Steuerung der einzelnen Antriebe derart, daß

- das Auflaufen einer Entsteinplatte gegen den Mitnehmer eines in seiner Grundstellung befindlichen Steinschlittens die Abwärtsbewegung des Stößelbalkens einleitet;

- nach abgeschlossenem Vorschub des Entsteinschlittens eine Aussteuerung des Mitnehmers in seine inaktive Ruhestellung und eine Verriegelung des wieder angehobenen Stößelbalkens in seiner Ruhestellung erfolgen;

- der Entsteinschlitten nach Aufhebung seiner Synchronisation mit dem Plattenband entgegen dessen Förderrichtung in seine Grundstellung verschoben wird, und daß

- bei dem in seiner Grundstellung befindlichen Entsteinschlitten sein Mitnehmer in den Förderweg der nächsten Entsteinplatte eingesteuert und sein Stößelbalken entriegelt werden.

Weitere Merkmale der Erfindung sind Gegenstand der Unteransprüche und werden in Verbindung mit weiteren Vorteilen der Erfindung anhand eines Ausführungsbeispieles näher erläutert.

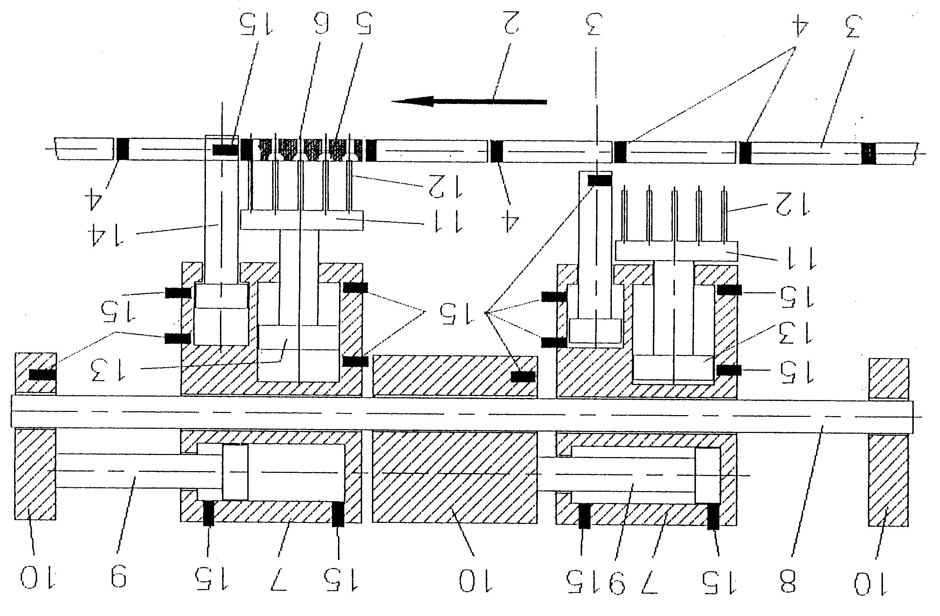

In der Zeichnung ist eine als Beispiel dienende Ausführungsform der Erfindung schematisch im Längsschnitt dargestellt.

Die dargestellte Entsteinmaschine weist ein horizontal geführtes Plattenband 1 auf, das im Arbeitsprozeß von einem nicht näher dargestellten Antrieb kontinuierlich in Richtung des Pfeiles 2 bewegt wird. Das Plattenband 1 setzt sich zusammen aus in Förderrichtung 2 gesehen hintereinander angeordneten Entsteinplatten 3, die auf nicht näher dargestellten Antriebsketten befestigt sind und an ihrer in Förderrichtung vorn liegenden Stirnkante 2 quer zur Förderrichtung seitlich herausragende Nocken 4 tragen. Jede Entsteinplatte 3 weist nach oben offene Vertiefungen 5 zur Aufnahme der Früchte auf, wobei jede Vertiefung 5 mit einem nach unten durch die Entsteinplatte 3 hindurchgehenden zentrischen Durchtrittsloch 6 in Verbindung steht, durch das der Stein der in der zugeordneten Vertiefung 5 liegenden Frucht herausgedrückt wird.

Oberhalb des Plattenbandes 1 sind zwei Entsteinschlitten 7 an beidseits des Plattenbandes 1 und parallel hierzu verlaufenden Längsführungen 8 verschiebbar angeordnet und zwar zwischen einer Grundstellung, die in der Zeichnung der rechts dargestellte Entsteinschlitten 7 einnimmt und einer Rückführstellung, die in der Zeichnung der links dargestellte Entsteinschlitten 7 einnimmt. Jeder Entsteinschlitten 7 weist einen eigenen Antrieb 9 auf, der in der Zeichnung schematisch als Kolbenantrieb dargestellt ist und an dem Maschinengrundgestell 10 sitzt. Dabei ist dieser Antrieb 9 so ausgelegt, daß er den ihm zugeordneten Entsteinschlitten 7 entgegen der Vorschubrichtung 2 des Plattenbandes 1 um eine Wegstrecke w verschieben kann, die der Länge 1 einer Entsteinplatte 3 entspricht.

Jeder der beiden Entsteinschlitten 7 trägt einen sich quer über das Plattenband 1 erstreckenden Stößelbalken 11, der auf seiner Unterseite mit Stößeln 12 bestückt ist, die in ihrer in der Zeichnung rechts dargestellten Arbeitsposition mit den unter ihnen befindlichen Vertiefungen 5 der Entsteinplatte 3 bzw. den den Vertiefungen 5 zugeordneten Durchtrittslöchern 6 lotrecht fluchten. Jeder Stößelbalken 11 ist von einem Hubantrieb 13, der in der Zeichnung schematisch als doppelt wirkender Kolben dargestellt ist, in eine inaktive Stellung anhebbar (linke Darstellung der Zeichnung) bzw. in Arbeitsstellung absenkbar (rechte Darstellung der Zeichnung).

Jeder Entsteinschlitten 7 weist ferner zwei Mitnehmer 14 auf, die in dem dargestellten Ausführungsbeispiel durch lotrechte verschiebbare Bolzen gebildet sind, die beidseitig des Plattenbandes 1 liegen und von einem nicht näher dargestellten Antrieb in ihre inaktive Stellung angehoben (linke Darstellung in der Zeichnung) bzw. in ihre Kupplungsstellung abgesenkt werden können (rechte Darstellung in der Zeichnung). In dieser Kupplungsstellung ragen die Mitnehmer 14 in den Förderweg je eines Nockens 4, der an dem in Förderrichtung 2 vorn liegenden Ende jeder Entsteinplatte 3 sitzt und sich seitlich von dieser nach außen erstreckt.

Die Arbeitsweise der Entsteinmaschine ist wie folgt:

Betrachtet man in der Zeichnung die rechte Darstellung, dann leitet das Auflaufen der Nocken 4 einer Entsteinplatte 3 gegen die abgesenkten Mitnehmerbolzen 14 des sich in seiner Grundstellung befindlichen Entsteinschlittens 7 eine Abwärtsbewegung des Stößelbalkens 11 ein. Durch das kontinuierlich vorlaufende Plattenband 1 wird der Entsteinschlitten 7 über die Nocken 4 und die Mitnehmerbolzen 14 mitgenommen; Plattenband 1 und Entsteinschlitten 7 sind also während des Arbeitsvorganges (Entsteinvorgang) bewegungssynchron miteinander gekoppelt. Erreicht der Stößelbalken 11 seine unterste Stellung, in der der Entsteinvorgang abgeschlossen ist, wird sofort der Rücklauf des Stößelbalkens 11 wieder eingeleitet. Erreicht der Stößelbalken 11 wieder seine oberste Position (inaktive Ruhestellung), werden die Mitnehmerbolzen 14 ebenfalls hochgezogen; der Entsteinschlitten 7 wird also von dem Plattenband 1 abgekoppelt. Haben die Mitnehmerbolzen 14 ihre oberste Position erreicht, erfolgt eine vorzugsweise mechanische Verriegelung des Stößelbalkens 11 in seiner oberen Ruhestellung. Es läuft dann der Antrieb 9 an, der den Entsteinschlitten 7 entgegen der Förderrichtung 2 über die Wegstrecke w verschiebt (die Ausgangsposition des Steinschlittens 7 vor Einleitung seiner Verschiebung durch den Antrieb 9 zeigt die linke Darstellung der Zeichnung). Dabei erfolgt die Verschiebung mit einer Geschwindigkeit, die größer ist als die Vorschubgeschwindigkeit des Plattenbandes 1. Erreicht der Entsteinschlitten 7 dann wieder seine Grundstellung (rechte Darstellung in der Zeichnung), werden die Mitnehmerbolzen 14 wieder abgesenkt und der Stößelbalken 11 entriegelt. Die Nocken 4 der dann folgenden Entsteinplatte 3 laufen dann wieder gegen die abgesenkten Abnehmerbolzen 14 auf, worauf sich der vorstehend beschriebene Arbeitszyklus wiederholt.

Dieser Bewegungsablauf wird als wegabhängige Folgesteuerung ausgeführt, d.h. daß der nachfolgende Vorgang erst nach Abschluß des vorangegangenen Vorganges durchgeführt wird. Dabei können die Antriebe für die Horizontalverschiebung der Entsteinschlitten 7 sowie für die lotrechten Hub- bzw. Absenkbewegungen des stößelbalkens 11 sowie der Mitnehmerbolzen 14 mechanisch, pneumatisch, hydraulisch oder auch elektrisch arbeiten.

Befindet sich der eine Entsteinschlitten 7 in seinem Arbeitsablauf, bewegt sich der andere Entsteinschlitten gerade im Rücklauf. Dabei ist die Anordnung der beiden Entsteinschlitten 7 so getroffen, daß jeder Entsteinschlitten immer nur jede zweite Entsteinplatte 3 beaufschlagt. Dadurch ergibt sich eine gleichmäßige Belastung der Ketten des Plattenbandes 1, da ständig ein Entsteinschlitten 7 mitgenommen wird, und sich der andere Entsteinschlitten im Rücklauf befindet.

Durch den kontinuierlichen Vorschub des Plattenbandes 1 unterliegt dieses einem erheblich geringeren Verschleiß. Die Früchte behalten ihre sich selbständig zentrierende Position innerhalb der Vertiefungen 5 bei, so daß eine mittige Entsteinung gewährleistet ist. Ein Versatz zwischen Stößeln 12 und Entsteinplatte 3 bzw. deren Vertiefungen 5 entfällt. Die gesamte Anordnung der Mechanik liegt oberhalb des Plattenbandes 1 und damit außerhalb des Saftbereiches. Die Anordnung von zwei Entsteinschlitten 7 führt zu einer erheblichen Leistungssteigerung im Vergleich zu herkömmlichen Maschinen, die mit vergleichbarer mittlerer Geschwindigkeit arbeiten.

Mit dem Bezugszeichen 15 sind Näherungsschalter gekennzeichnet, über die die vorstehend beschriebene wegabhängige Folgesteuerung gesteuert werden kann.

**Patentansprüche**

1. Maschine zum Entsteinen von Früchten, insbesondere Kirschen, mit einem angetriebenen, horizontal geführten Plattenband (1), dessen in Förderrichtung (2) hintereinander angeordneten Entsteinplatten (3) Vertiefungen (5) zur Aufnahme der Früchte aufweisen, und mit oberhalb des Plattenbandes (1) angeordneten Stößeln (12), die zur Durchführung des Entsteinvorganges von einem Hubantrieb (13) lotrecht fluchtend mit den genannten Vertiefungen (5) absenkbar und nach der Entsteinung wieder anhebbar sind, **gekennzeichnet durch** folgende Merkmale:
a) Der Antrieb des Plattenbandes (1) ist so ausgelegt, daß er dem Plattenband (1) eine zumindest angenähert kontinuierliche Vorschubgeschwindigkeit verleiht;
b) die Stößel (12) sind mit ihrem Hubantrieb (13) an zumindest einem Entsteinschlitten (7) angeordnet, der parallel zum Plattenband (1) verfahrbar und von einem intermittierend arbeitenden Antrieb (9) entgegen der genannten Förderrichtung (2) um zumindest die in Förderrichtung (2) gemessene Länge (1) einer Entsteinplatte (3) verschiebbar ist;
c) der Entsteinschlitten (7) weist zu seiner zeitweiligen Synchronisation mit dem Plattenband (1) zumindest einen Mitnehmer (14) auf, der von einem Antrieb in den Vorschubweg einer Entsteinplatte (3) einsteuerbar und aus dem Vorschubweg aussteuerbar ist.

2. Maschine nach Anspruch 1, **gekennzeichnet durch** zwei in Förderrichtung (2) hintereinander angeordnete, unabhängig von einander gegenläufig verschiebbare Entsteinschlitten (7).

3. Maschine nach Anspruch 1 oder 2, **dadurch gekennzeichnet**, daß als Mitnehmer (14) zumindest ein lotrecht verschiebbarer Bolzen vorgesehen ist, der in abgesenkter Stellung in den Förderweg eines an jeder Entsteinplatte (3) sitzenden Nocken (15) oder dergleichen ragt.

4. Maschine nach Anspruch 3, **dadurch gekennzeichnet**, daß jeder Entsteinschlitten (7) zwei Mitnehmerbolzen (14) aufweist, die beidseitig des Plattenbandes (1) liegen.

5. Maschinen nach einem der vorhergehenden Ansprüche, **dadurch gekennzeichnet**, daß die Stößel (12) jedes Entsteinschlittens (7) an einem vom Hubantrieb (13) beaufschlagten Stößelbalken (11) befestigt sind.

6. Maschine nach einem vorhergehenden Ansprüche, **gekennzeichnet durch** eine Steuerung der einzelnen Antriebe (9, 13) derart, daß
- das Auflaufen einer Entsteinplatte (3) gegen den Mitnehmer (14) eines in seiner Grundstellung befindlichen Steinschlittens (7) die Abwärtsbewegung des Stößelbalkens ( 11) einleitet;
- nach abgeschlossenem Vorschub des Entsteinschlittens (7) eine Aussteuerung des Mitnehmers (14) in seine inaktive Ruhestellung und eine Verriegelung des wieder angehobenen Stößelbalkens (11) in seiner Ruhestellung erfolgen;
- der Entsteinschlitten (7) nach Aufhebung seiner Synchronisation mit dem Plattenband (1) entgegen dessen Förderrichtung (2) in seine Grundstellung verschoben wird, und daß
- bei dem in seiner Grundstellung befindlichen Entsteinschlitten (7) sein Mitnehmer (14) in den Förderweg der nächsten Entsteinplatte (3) eingesteuert und sein Stößelbalken (11) entriegelt werden.

EP 0 509 498 A1

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 243 530 (KOK A.)<br>* Seite 1, rechte Spalte, Zeile 32 - Seite 2, rechte Spalte, Zeile 32; Abbildungen 1-3 *<br>--- | 1,5 | A23N4/06 |
| X | US-A-2 567 591 (ASHLOCK G.W.)<br>* Spalte 2, Zeile 48 - Spalte 4, Zeile 64 *<br>--- | 1,5 | |
| A | EP-A-0 093 679 (MECANIQUE GENERALE J. DEVILLE & CIE)<br>* Seite 4, Zeile 16 - Seite 9, Zeile 6; Abbildungen 1-12 *<br><br>----- | 1 | |
| | | | **RECHERCHIERTE SACHGEBIETE (Int. Cl.5 )**<br><br>A23N |

Der vorliegende Recherchenbericht wurde für alle Patentansprüche erstellt

| Recherchenort | Abschlußdatum der Recherche | Prüfer |
|---|---|---|
| DEN HAAG | 31 JULI 1992 | ELSWORTH D. |